# EUROPEAN PATENT SPECIFICATION

(11) **EP 3 786 681 B1**
(45) Date of publication and mention of the grant of the patent: **27.03.2024**
(21) Application number: 20191738.2
(22) Date of filing: 19.08.2020
(51) Int. Cl.: G02B 6/44

(54) **EASY-TO-PEEL HIGH-DENSITY FULL-DRY OPTICAL FIBER CABLE**
LEICHT ABZIEHBARES FASEROPTISCHES KABEL MIT HOHER DICHTE
CÂBLE À FIBRE OPTIQUE COMPLÈTEMENT SEC, HAUTE DENSITÉ ET FACILE À PELER

(30) Priority: 02.09.2019 CN 201921443268 U
(43) Date of publication of application: 03.03.2021
(73) Proprietor: Yangtze Optical Fibre and Cable Joint Stock Limited Company, East Lake High-tech Development Zone Wuhan Hubei 430073 (CN)
(72) Inventor: HU, Haifeng, Wuhan, Hubei 430073 (CN); ZHAN, Hao, Wuhan, Hubei 430073 (CN); XIONG, Zhuang, Wuhan, Hubei 430073 (CN); RUAN, Yunfang, Wuhan, Hubei 430073 (CN); XU, Ya, Wuhan, Hubei 430073 (CN)
(74) Representative: Laufhütte, Dieter

(56) References cited:
- US-A1- 2003 215 198
- US-A1- 2018 203 198
- US-B1- 9 323 019

## Description

### Field of the Invention

The present disclosure relates to an easy-to-peel high-density full-dry optical fiber cable, and belongs to the technical field of optoelectronic transmission.

### Background of the Invention

With the development of optical communication technology, construction of optical networks is facing higher requirements. Optical fiber cables will be used more and more, and a workload of cable laying will be greatly increased. In order to speed up the construction of the optical networks, it is required to not only increase density of the optical fiber cables but also improve construction efficiency. At present, traditional optical fiber cables have relatively low fiber optic density, and thus limited pipeline network resources are occupied; most of the traditional optical fiber cables are filled with water-blocking gel, and it is required to clear the gel during laying, which not only causes pollution to the environment but also results in very low construction efficiency; and the fiber access is generally difficult and easy to damage the optical fibers.

US 2003/215198 A1 relates to fiber optic cables used for indoor and/or outdoor applications and, in particular, to fiber optic cables having an improved buffer region and with improved performance characteristics.

US 2018/203198 A1 relates to a fiber optic cable, which includes a core and a binder film surrounding the core. The core includes a central strength member and core elements, such as buffer tubes containing optical fibers, where the core elements are stranded around the central strength member in a pattern of stranding including reversals in lay direction of the core elements.

US 9 323 019 B1 discloses a long span ADSS fiber optic cable has an outer jacket, a central tension rod member, and gel-free buffer tubes stranded around the rod member

### Summary of the Invention

The problem to be solved by the present disclosure is to provide an easy-to-peel high-density full-dry optical fiber cable so as to overcome the above deficiencies in existing technologies. The easy-to-peel high-density full-dry optical fiber cable has such features as being simple in structure, high in optical fiber density, easy to peel, and convenient to install and splice.

In order to solve the above-mentioned problem, the present invention provides a full-dry optical fiber cable according to independent claim 1. Further embodiments are provided by the dependent claims.

The present invention provides the following beneficial effects. 1. The cable core is provided therein with no central reinforce element, but is provided with auxiliary reinforce elements in gaps among loose tubes, which saves space and improves fiber optic density. The optical fiber cable has high fiber optic density, which meets requirements of high-density networks and improves utilization of laying resources; moreover, the optical fiber cable has a small diameter, which is only about 1/2 of a traditional optical fiber cable, is light in weight, and has excellent mechanical performance, and thus can be used in pipe laying and self-supporting overhead laying. 2. The sheath and the loose tubes are easy to peel by hand without damaging the optical fibers, have no gel to clear, and are convenient to use and splice, thereby improving construction efficiency. 3. The optical fiber cable has an all-dielectric metal-free structure, and has properties of anti-electromagnetic interference and lightning protection; and the loose tubes which are flame-retardant, low-smoke and halogen-free play a role of flame retarding and fireproofing when arranged indoors.

### Brief Description of the Drawings

Fig. 1 is a radial cross-sectional view according to an embodiment of the claimed invention; **and**
Fig. 2 is a radial cross-sectional view of a loose tube according to an embodiment of the claimed invention.

### Detailed Description of the Embodiments

The present disclosure will be further explained in conjunction with accompanying drawings and an embodiment.

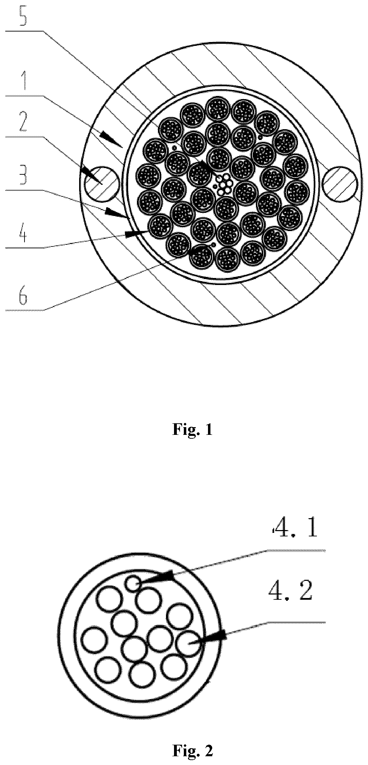

An embodiment of the present disclosure is as shown in Figs. 1 and 2. An easy-to-peel high-density full-dry optical fiber cable includes an outer sheath 1 and a cable core coated in the outer sheath. The cable core is a full-dry cable core, and includes non-metal auxiliary reinforce elements 5. The non-metal auxiliary reinforce elements are aramid yarns or glass yarns. The cable core further includes stranded easy-to-peel loose tubes 4. There are three layers of loose tubes. The number of the loose tubes in a first layer is six; the number of the loose tubes in a second layer is twelve; and the number of the loose tubes in a third layer is eighteen. The loose tubes each are provided therein with optical communication units 4.2 and water-blocking yarns 4.1. The loose tubes are made of a material which is flame-retardant, low-smoke and halogen-free, and the loose tubes each have an outer diameter of 1.3 mm and a wall thickness of 0.1 mm, which facilitates peeling of the loose tubes. The optical communication units are optical fibers or optical fiber ribbons. The loose tubes each contain twelve optical fiber counts therein. The cable core is provided therein with water-blocking yarns 6, and is wrapped by a water-blocking tape 3, an outermost layer being the outer sheath. The outer sheath is provided at two sides with non-metal reinforce elements 2, and the non-metal reinforce elements each have a thinnest unilateral wall thickness of 0.8 mm on the periphery thereof. The sheath may be peeled off along this direction. In the present embodiment, the cable with 432 optical fiber counts has a diameter of only about 14 mm.

## Claims

1. A full-dry optical fiber cable, comprising an outer sheath (1) and a cable core,
wherein the cable core is a full-dry stranded cable core and comprises loose tubes (4) which are provided therebetween with non-metal auxiliary reinforce elements (5) and
which are provided with optical communication units (4.2) and first water-blocking yarns (4.1) inside each of the loose tubes (4); and the cable core is provided therein with second water-blocking yarns (6), and is wrapped by a water-blocking tape (3), an outermost layer being the outer sheath (1), **characterized in that** the non-metal auxiliary reinforce elements (5) are provided in gaps among the loose tubes (4), **in that** the non-metal auxiliary reinforce elements (5) are aramid yarns or glass yarns, **in that** the loose tubes (4) are made of a material which is flame-retardant, low-smoke and halogen-free, and **in that** each of the loose tubes (4) has an outer diameter in a range of 1.1-1.3 mm and a wall thickness in a range of 0.1-0.15 mm.

2. The full-dry optical fiber cable according to claim 1, wherein the outer sheath (1) is provided at two sides with non-metal reinforce elements (2), and the non-metal reinforce elements (2) each have a unilateral wall thickness in a range of 0.3-1.0 mm on the periphery thereof.

3. The full-dry optical fiber cable according to claim 2, wherein the non-metal reinforce elements (2) are fiber reinforced plastic, FRP.

4. The full-dry optical fiber cable according to claim 1 or claim 2, wherein the optical communication units (4.2) are optical fibers or optical fiber ribbons; and the loose tubes (4) each contain twelve optical fiber counts therein.

5. The full-dry optical fiber cable according to claim 1 or claim 2, wherein two to three layers of the loose tubes (4) are provided.

## Patentansprüche

1. Volltrockenes Optikfaserkabel mit einem Außenmantel (1) und einem Kabelkern,
wobei der Kabelkern ein volltrockener verseilter Kabelkern ist und lose Röhren (4) umfasst, die dazwischen mit nichtmetallischen Hilfsverstärkungselementen (5) versehen sind und die mit optischen Kommunikationseinheiten (4.2) und ersten wasserblockierenden Garnfäden (4.1) innerhalb jeder der losen Röhren (4) versehen sind; und der Kabelkern darin mit zweiten wasserblockierenden Garnfäden (6) versehen ist und von einem wasserblockierenden Band (3) umhüllt ist, wobei eine äußerste Schicht der Außenmantel (1) ist, **dadurch gekennzeichnet, dass** die nichtmetallischen Hilfsverstärkungselemente (5) in Lücken zwischen den losen Röhren (4) bereitgestellt sind, dass die nichtmetallischen Hilfsverstärkungselemente (5) Aramidgarnfäden oder Glasgamfäden sind, dass die losen Röhren (4) aus einem Material hergestellt sind, das flammhemmend, raucharm und halogenfrei ist, und dass jede der losen Röhren (4) einen Außendurchmesser in einem Bereich von 1,1-1,3 mm und eine Wanddicke in einem Bereich von 0,1-0,15 mm aufweist.

2. Volltrockenes Optikfaserkabel nach Anspruch 1, wobei die Außenhülle (1) an zwei Seiten mit nichtmetallischen Verstärkungselementen (2) versehen ist und die nichtmetallischen Verstärkungselemente (2) jeweils eine einseitige Wanddicke in einem Bereich von 0,3-1,0 mm an ihrem Umfang aufweisen.

3. Volltrockenes Optikfaserkabel nach Anspruch 2, wobei die nichtmetallischen Verstärkungselemente (2) faserverstärkter Kunststoff, FRP, sind.

4. Volltrockenes Optikfaserkabel nach Anspruch 1 oder Anspruch 2, wobei die optischen Kommunikationseinheiten (4.2) optische Fasern oder optische Faserbänder sind; und die losen Röhren (4) jeweils zwölf optische Faserkerne darin enthalten.

5. Volltrockenes Glasfaserkabel nach Anspruch 1 oder 2, wobei zwei oder drei Schichten der losen Röhren (4) bereitgestellt sind.

## Revendications

1. Câble à fibres optiques tout sec, comprenant une gaine extérieure (1) et une âme de câble,
dans lequel l'âme de câble est une âme de câble multi-conducteurs tout sec et comprend des tubes lâches (4) qui sont pourvus entre eux d'éléments de renforcement auxiliaires non métalliques (5) et qui sont pourvus d'unités de communication optiques (4.2) et de premiers fils d'étanchéité (4.1) à l'intérieur de chacun des tubes lâches (4) ; et l'âme de câble est pourvue en elle de deuxièmes fils d'étanchéité (6), et est enveloppée d'un ruban d'étanchéité (3), une couche extérieure étant la gaine extérieure (1), **caractérisé en ce que** les éléments de renforcement auxiliaires non métalliques (5) sont prévus dans des espaces entre les tubes lâches (4), **en ce que** les éléments de renforcement auxiliaires non métalliques (5) sont des fils d'aramide ou des fils de verre, **en ce que** les tubes lâches (4) sont constitué d'un matériau qui est ignifuge, à faible émission de fumée et exempt d'halogène, et **en ce que** chacun des tubes lâches (4) présente un diamètre situé dans une plage de 1,1 à 1,3 mm et une épaisseur de paroi située dans une plage de 0,1 à 0,15 mm.

2. Câble à fibres optiques tout sec selon la revendication 1, dans lequel la gaine extérieure (1) est pourvue sur deux côtés d'éléments de renforcement non métalliques (2), et les éléments de renforcement non métalliques (2) présentent chacun une épaisseur de paroi unilatérale située dans une plage de 0,3 à 1 mm sur la périphérie de celle-ci.

3. Câble à fibres optiques tout sec selon la revendication 2, dans lequel les éléments de renforcement non métalliques (2) sont en plastique renforcé par fibres, FRP.

4. Câble à fibres optiques tout sec selon la revendication 1 ou la revendication 2, dans lequel les unités de communications optiques (4.2) sont des fibres optiques ou des rubans à fibres optiques ; et les tubes lâches (4) contiennent en eux chacun le nombre de douze fibres optiques.

5. Câble à fibres optiques tout sec selon la revendication 1 ou la revendication 2, dans lequel deux à trois couches de tubes lâches (4) sont prévues.
